# EUROPEAN PATENT SPECIFICATION

(11) **EP 4 404 415 B1**
(45) Date of publication and mention of the grant of the patent: **21.10.2026**
(21) Application number: 23152764.9
(22) Date of filing: 20.01.2023
(51) Int. Cl.: H02J 3/38, H02J 3/46, H02J 3/48

(54) **CONTROL METHOD FOR CONVERTERS WITH VIRTUAL INERTIA**
STEUERUNGSVERFAHREN FÜR WANDLER MIT VIRTUELLER TRÄGHEIT
PROCÉDÉ DE COMMANDE DE CONVERTISSEURS À INERTIE VIRTUELLE

(43) Date of publication of application: 24.07.2024
(73) Proprietor: Hitachi Energy Ltd, 8050 Zürich (CH)
(72) Inventor: TUCKEY, Andrew Mark, Livingstone, 0837 (AU)
(74) Representative: Vossius & Partner Patentanwälte Rechtsanwälte mbB

(56) References cited:
- EP-A1- 3 972 070
- D'ARCO SALVATORE ET AL: "Improving the Power Reference Tracking of Virtual Synchronous Machines by Feed-Forward Control", 2021 IEEE 19TH INTERNATIONAL POWER ELECTRONICS AND MOTION CONTROL CONFERENCE (PEMC), IEEE, 25 April 2021 (2021-04-25), pages 102 - 107, XP033916275, DOI: 10.1109/PEMC48073.2021.9432548
- IPPOLITO MARIANO G ET AL: "Fundamental Analysis of Grid-Forming Converters Enhanced with Feedforward Controls", 2022 INTERNATIONAL CONFERENCE ON POWER ENERGY SYSTEMS AND APPLICATIONS (ICOPESA), IEEE, 25 February 2022 (2022-02-25), pages 312 - 318, XP034113098, DOI: 10.1109/ICOPESA54515.2022.9754484

## Description

### Technical Field

The present disclosure relates to a method, device, computer-readable medium, and system for controlling a power converter coupled to an electrical grid.

### Background

An electrical grid, historically comprising predominantly synchronous generators (SGs), now comprises increasing numbers of new renewable energy sources, such as a photo-voltaic (PV) solar panels and wind turbines, connected to the grid by power electronic inverters. The characteristics of the inverter-based resources (IBRs) however differ from that of the synchronous generators, e.g., having inertia and high fault current, which has affected the operation of the electrical grid, in particular operation under the assumption that SGs are dominant within the grid. In particular, the fast inverter behavior has caused large frequency swings, instabilities, and black outs of power grids.

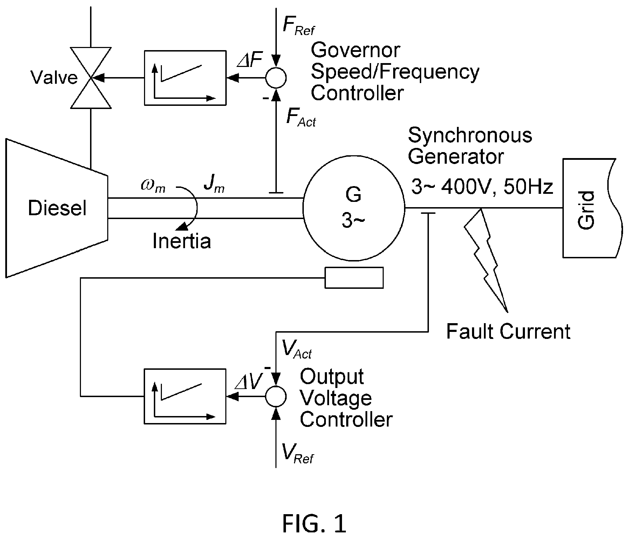

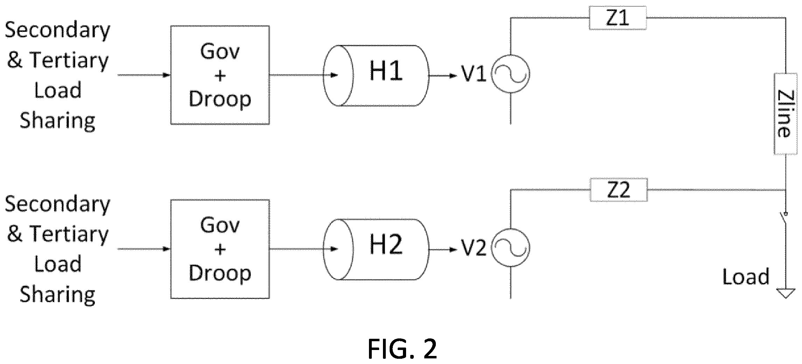

Fig. 1 illustrates a traditional synchronous generator and the corresponding control system. SGs are rotating machines driven typically by a turbine (steam, gas or hydro) or an engine (diesel or heavy fuel oil), thusly comprising an inertia as an inherent property. Along with further controls of the speed and voltage, the generators passively share and balance the generation between themselves and maintain the grid frequency within a fixed band, without communication. The SGs also provide a large fault current capability, that can quickly and reliably operate protection systems. In addition, SGs have several inherent attributes, as illustrated in Fig. 2, that make them compliant. The system of Fig. 2 comprises parallel connected generators, each with respective regulators, inertia, and output impedance. When there is a load change the initial portion of the load change that the SG shoulders is determined by how tightly coupled the SG is to that load change. An SG with higher impedance from stator and transformer leakage and line impedance will pick up less load variation than one that has a low impedance coupling. The inertia affects the next dynamic in load sharing, with the larger pickup being shouldered by the generators with the higher inertia. Following the inertial response, the frequency controllers' strength and the frequency droop coefficient determines how much a generator will contribute to the grid disturbance, with the frequency droop determining the steady-state portion of the load shared (if no secondary / tertiary control is used).

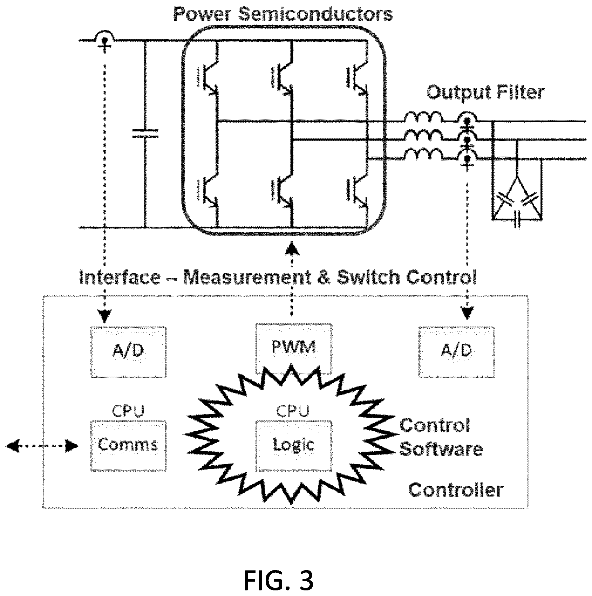

Fig. 3 illustrates a typical 3-phase, 2-level power electronic inverter and its controller. In contrast to the inherent properties of the SGs, the IBRs exhibits limited energy storage in either the DC bus capacitor (used only to smooth the DC ripple) or the output filter (low value inductors and capacitors used) and can't inherently provide grid inertia; moreover they also provide low fault current. Typically IBRs have been controlled to be grid following, which requires no additional energy storage capability, but this requires relatively stiff grids to operate, with SGs providing the grid stiffness and fault current.

An inverter can be controlled to act like a voltage source creating a so-called Grid-Forming Inverter (GFMI). Using a GFMI in the grid can increase grid stiffness and reduces the instability within the grid, however, such inverters are often too stiff. Consequently, transient load variations within the grid are picked up by the GFMI, shielding these variations from other, slower-responding generators, like SGs. Moreover, normal grid transients, like phase jumps, can cause stiff GFMIs to experience large transient currents.

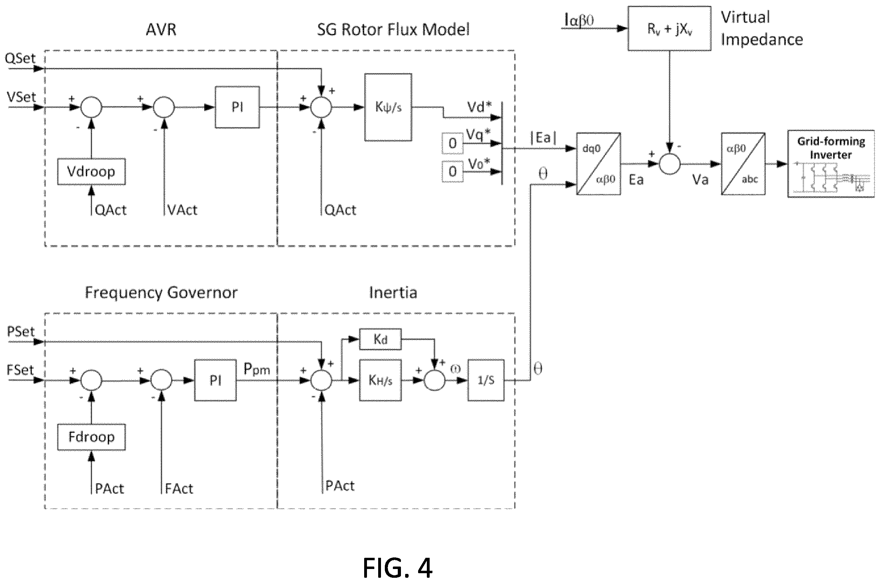

The inertia of the SGs can be mimicked, virtually, by an IBR using control methods. Adding SG compatible responses using a Virtual Synchronous Machine (VSM) controller together with energy storage the response of the SGs is mimicked. Fig. 4 illustrates a virtual synchronous machine (VSM) control system comprising five components. The VSM herein refers to an electrical equipment mimicking at least one behaviour, in particular a physical behaviour, more particularly inertia, of a synchronous machine by means of a control system designed to generate at least one parameter to be used in the mimicking. The first component is the virtual impedance, *Rᵥ + jXᵥ,* having a response that resembles an impedance at the output of an SG. This virtual impedance is the key to creating GFMIs that can be paralleled with other GFMIs, with SGs and with the grid. Making the impedance predominantly inductive, i.e. high *Xᵥ* to *Rᵥ* ratio, enables the VSM to have a strong coupling between active power and phase angle, strong coupling between reactive power and voltage magnitude, and decoupling of these two relationships. The rotor flux model and automatic voltage regulator (AVR) make the reactive power/voltage magnitude dynamics like that of an SG so there is a good proportion of sharing during transients with tuneable dynamics. Similarly, the inertia model and frequency-governor make the VSM have active power/frequency dynamics like that of an SG.

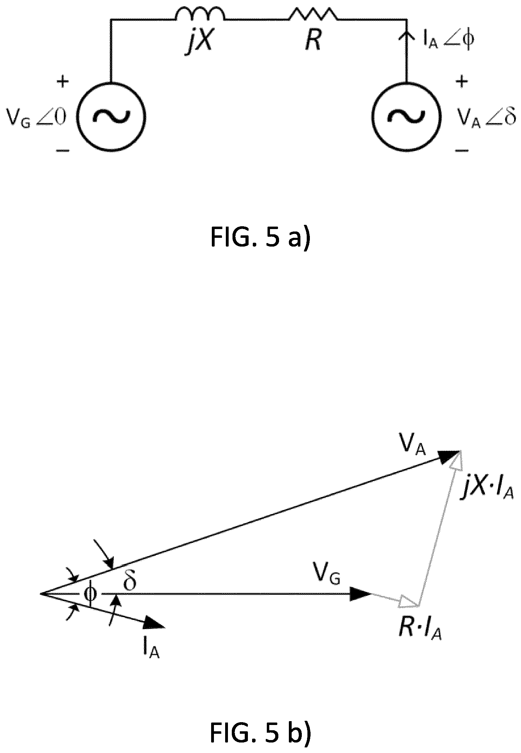

Fig. 5 a) illustrates an electrical equivalent network of the power system coupling a voltage source (represented in the figure by *V_{A}*) to a grid (represented in the figure by *V_{G}*) with a coupling impedance *R* + *jX* joining them. Fig. 5 b) illustrates a phasor diagram involving the parameters of the electrical equivalent network of the power system illustrated in Fig. 5 a). Eq.(1) and eq.(2) describe the full equations for real and reactive power flow therebetween. The voltage source *V_{A}* represents the internal voltage inside a GFMI. The real and reactive power flow from the GFMI voltage source are given by: ${P}_{A} = \frac{{V}_{A}}{{R}^{2} + {X}^{2}} \left[R\left({V}_{A}-{V}_{G} cos\left(δ\right)\right)+{XV}_{G} sin\left(δ\right)\right]$ (1) ${Q}_{A} = \frac{{V}_{A}}{{R}^{2} + {X}^{2}} \left[{RV}_{A}sin \left(δ\right)+X\left({V}_{A}-{V}_{G}cos\left(δ\right)\right)\right] .$ (2)

For grids that are predominantly inductive, the above two equations can be simplified as follows: ${P}_{A} \approx \frac{{V}_{A}}{X} \left[{V}_{G} sin\left(δ\right)\right]$ (3) ${Q}_{A} \approx \frac{{V}_{A}}{X} \left[{V}_{A}-{V}_{G}cos\left(δ\right)\right]$ (4) and for small δ, eq.(3) can be further simplified as follows: ${P}_{A} \approx \frac{{V}_{A} {V}_{G}}{X} δ .$ (5)

For most grids *X* is fixed and *V_{A}* & *V_{G}* are usually constant, thusly eq.(5) can be simplified as follows: ${P}_{A} ∝ δ .$ (6)

The power transferred to the grid from a GFMI, including one that has the VSM control, is approximately proportional to the power angle. The VSMs direct power input, *P_{Set}* of Fig. 4 can be used to set the VSM power.

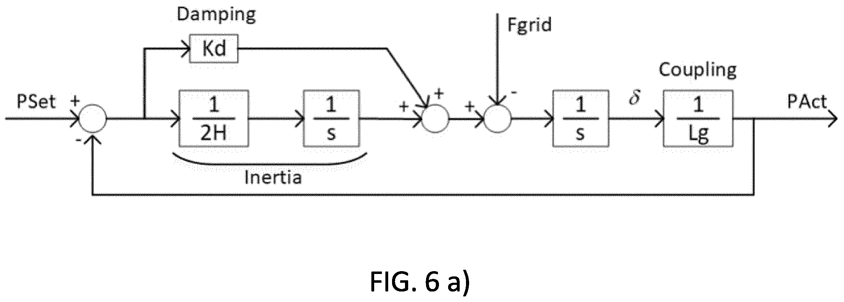

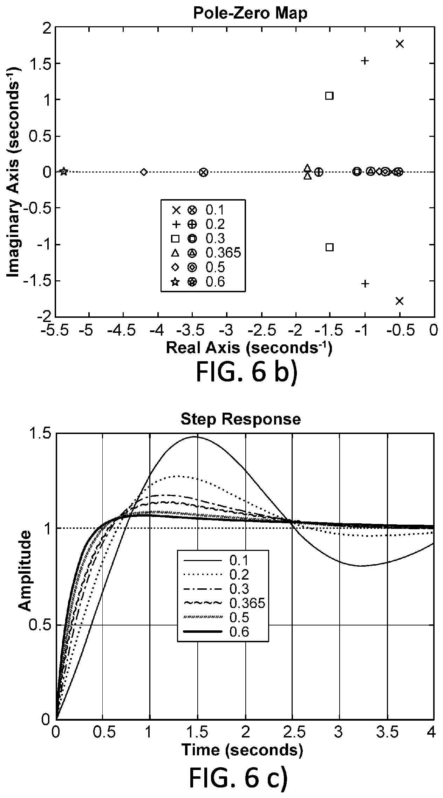

Fig. 6 a) illustrates a control block diagram, or equivalently State Block Diagram (SBD), of the VSM connected to a power system. The control scheme of Fig. 6 a) shows the relationship between output power of the power converter *P_{Act},* given the voltage of the power converter and the voltage electrical parameter of the electrical grid. A reference power *P_{Set}* is used together with *P_{Act}* to determine a power control error. The inertia model of the SG is represented with control blocks comprising (1/2H) and (1/s). A control path including a damping model comprising damping parameter *K_{d}* is also shown. In addition, the frequency of the grid *F_{grid}* is a mathematical construct to aid the analysis and thusly is shown for completeness, but may be omitted from the control system analysis, as done in the calculations disclosed herein. Changing the *P_{Set}* value changes the input to the inertia and damping block, and indirectly affects the power angle δ. Since the system is closed-loop the new value of δ required to achieve *P_{Set}* is realised after a transient. Using the SBD in Fig. 6 a) the transfer function TF can be determined as the following: $TF = \frac{{P}_{Act}}{{P}_{Set}} = \frac{\left(2{HK}_{d}\right) s + 1}{\left(2{HL}_{g}\right) {s}^{2} + \left(2{HK}_{d}\right) s + 1}$ (7) which is a second order system with resonant frequency of ${ω}_{0} = \sqrt{\frac{1}{2 {HL}_{g}}}$ (8) and damping coefficient $ξ = \frac{{K}_{d}}{2 {L}_{g} \sqrt{\frac{1}{2 {HL}_{g}}}}$ (9) with critical damping at ${K}_{d , o} = 2 {L}_{g} \sqrt{\frac{1}{2 {HL}_{g}}}$ (10)

Fig. 6 b) illustrates a pole-zero map of a control loop illustrated in Fig. 6 a), and Fig. 6 c) illustrates the response of the system of Fig. 6 a) with inertia set to 1.5 seconds, and the effective inductive coupling set to 0.1 pu with various values of damping *K_{d}*. It should be noted that the effective inductive coupling, *L_{g}* in the SBD and the formulae above, is a combination of virtual inductance and the grid Thevenin equivalent inductance. In particular, Fig. 6 b) shows the pole-zero map for various values of damping, with Fig. 6 c) showing the step response for the same set of damping values. For this particular system critical occurs with *K_{d,o}* = 0.365. The step response is slow, about 0.5 seconds due to the inertia.

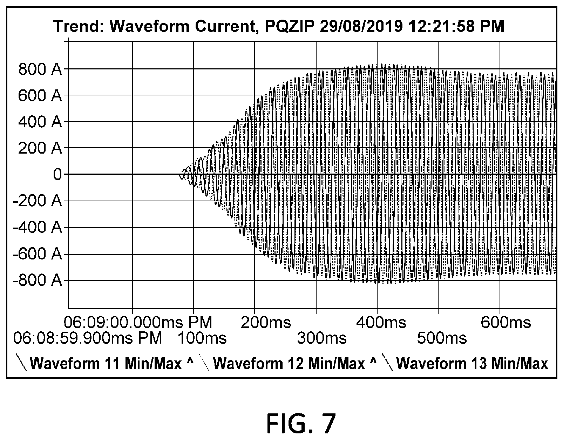

Fig. 7 illustrates a measurement of a system implementing the control block of Fig. 6 a). The system uses a fast active power injection scheme, called the System Integrity Protection Scheme (SIPS), to enhance the reliability of network and support power system operation with the high penetration of wind in the state. SIPS works by requesting fast power injection from assets upon contingency events that result in a power deficit. A Battery Energy Storage System (BESS) with VSM functionality is installed in a state and participates in SIPS. An activate signal is sent to the BESS which triggers the maximum output by setting the direct *P_{Set}* input to the BESS rated power value. The SIPS trigger is sent at 06:09pm from the centralized control centre. After a 40ms comms delay to the microgrid followed by a further 40ms comms delay within the microgrid the power command is given to the BESS. The output power is then ramped at the maximum rate, limited by the BESS inertia, for the inertial system with full output being reached by 300ms. A faster step response is desired.

Thus, there is a need to improve a method, device, computer-readable medium, and system for controlling a power converter coupled to an electrical grid, in particular through modification of the control system building block to improve the step response thereof. D'ARCO SALVATORE ET AL: "Improving the Power Reference Tracking of Virtual Synchronous Machines by Feed-Forward Control" (2021 IEEE 19TH INTERNATIONAL POWER ELECTRONICS AND MOTION CONTROL CONFERENCE (PEMC)) is related prior art.

### Summary

The invention is specified by the independent claims. Preferred embodiments are defined in the dependent claims. In the following description, although numerous features may be designated as optional, it is nevertheless acknowledged that all features comprised in the independent claims are not to be read as optional. The present disclosure relates to a method for controlling a power converter coupled to an electrical grid, the method comprising: obtaining an output power of the power converter, an electrical parameter of the power converter, and an electrical parameter of the electrical grid; determining a power control error based on the output power of the power converter and a reference power; determining a rotational frequency of an inertia model based on an inertia model with the power control error as an input, wherein the inertia model is a mathematical model of the inertia of a machine; determining a phase angle based on the rotational frequency of the inertia model and on at least one control signal generated by at least one parameter following at least one control path different from a control path including the inertia model, wherein the phase angle is a target angle between the electrical parameter of
the power converter and the electrical parameter of the electrical grid; and controlling the power converter based on the phase angle.

In an embodiment, the at least one control path different from the control path including the inertial model is a feedforward path including a feedforward control block.

In an embodiment, the method further comprises obtaining the output power of the power converter based on a coupling model with the phase angle as an input.

In an embodiment, the coupling model is a mathematical model of an electrical coupling of the power converter to the electrical grid.

In an embodiment, the coupling model comprises a coupling term expressed in terms of a coupling impedance comprising an impedance at the output of the power converter and an impedance at the coupled port of the electrical grid.

In an embodiment, the method further comprises controlling the power converter based on the obtained output power of the power converter.

In an embodiment, the feedforward control block comprises a feedforward parameter which is determined based on the coupling parameter.

In an embodiment, before an operation of the power converter, the output power of the power converter is a pre-set value or a modelled output of a closed feedback control loop receiving the reference power as an input.

In an embodiment, during the operation of the power converter, the output power of the power converter is updated, in particular based on the output power of the power converter measured during the operation of the power converter.

In an embodiment, the coupling impedance is a pre-set value determined before an operation of the power converter.

In an embodiment, the coupling impedance is determined, in particular adaptively and/or iteratively during the operation of the power converter, based on a differential phase angle in two iterations and the differential output power of the power converter in the two iterations.

In an embodiment, the coupling impedance is determined, in particular adaptively and/or iteratively during the operation of the power converter, based on the determined phase angle and a reference expected phase angle.

In an embodiment, the method further comprises updating, in particular iteratively, the coupling parameter based on the coupling impedance.

In an embodiment, the method further comprises updating, in particular iteratively, the feedforward control block based on the coupling parameter.

In an embodiment, a further control path different from the at least one control path comprises a damping model taking the power control error as an input, wherein the damping model is a mathematical model of the damping of the machine, and wherein the rotational frequency is determined based further on the output of the damping model.

In an embodiment, the electrical parameter of the power converter is a voltage or current of the power converter.

In an embodiment, the electrical parameter of the electrical grid is a voltage or current of the electrical grid.

In an embodiment, the at least one parameter is any one of the power control error, the output power of the power converter, or the reference power.

In an embodiment, the phase angle is a combination, in particular a linear combination, of an integral of the rotational frequency of the inertia model and the at least one control signal.

In an embodiment, the machine is a synchronous generator.

In an embodiment, the inertia model is a mathematical model of the inertia of the synchronous generator.

In an embodiment, a virtual synchronous machine, VSM, is or comprises the inertia model, and wherein the power converter is controlled based on the VSM.

The present disclosure relates to a device for controlling a power converter coupled to an electrical grid, the device comprising a processor being configured to: obtain an output power of the power converter, an electrical parameter of the power converter, and an electrical parameter of the electrical grid; determine a power control error based on the output power of the power converter and a reference power; determine a rotational frequency of an inertia model based on an inertia model with the power control error as an input, wherein the inertia model is a mathematical model of the inertia of a machine; determine a phase angle based on the rotational frequency of the inertia model and on at least one control signal generated by at least one parameter following at least one control path different from a control path including the inertia model, wherein the phase angle is a target angle between the electrical parameter of the power converter and the electrical parameter of the electrical grid; and control the power converter based on the phase angle.

In an embodiment, the at least one control path different from the control path including the inertial model is a feedforward path including a feedforward control block.

In an embodiment, the processor is further configured to obtain the output power of the power converter based on a coupling model with the phase angle as an input.

In an embodiment, the coupling model is a mathematical model of an electrical coupling of the power converter to the electrical grid.

In an embodiment, the coupling model comprises a coupling term expressed in terms of a coupling impedance comprising an impedance at the output of the power converter and an impedance at the coupled port of the electrical grid.

In an embodiment, the processor is configured to control the power converter based on the obtained output power of the power converter.

In an embodiment, the feedforward control block comprises a feedforward parameter which is determined based on the coupling parameter.

In an embodiment, before an operation of the power converter, the output power of the power converter is a pre-set value or a modelled output of a closed feedback control loop receiving the reference power as an input.

In an embodiment, during the operation of the power converter, the output power of the power converter is updated, in particular based on the output power of the power converter measured during the operation of the power converter.

In an embodiment, the processor is configured to determine and/or update the output power of the power converter before, during, and/or after the operation of the power converter.

In an embodiment, the coupling impedance is a pre-set value determined before an operation of the power converter.

In an embodiment, the coupling impedance is determined, in particular adaptively and/or iteratively during the operation of the power converter, based on a differential phase angle in two iterations and the differential output power of the power converter in the two iterations.

In an embodiment, the coupling impedance is determined, in particular adaptively and/or iteratively during the operation of the power converter, based on the determined phase angle and a reference expected phase angle.

In an embodiment, the method further comprises updating, in particular iteratively, the coupling parameter based on the coupling impedance.

In an embodiment, the processor is configured to determine and/or update the coupling impedance before, during, and/or after the operation of the power converter.

In an embodiment, the method further comprises updating, in particular iteratively, the feedforward control block based on the coupling parameter.

In an embodiment, the processor is configured to update the feedforward control block.

In an embodiment, the inertia model further comprises a damping model taking the power control error as an input, wherein the damping model is a mathematical model of the damping of the machine, and wherein the rotational frequency is determined based further on the output of the damping model.

In an embodiment, the electrical parameter of the power converter is a voltage or current of the power converter.

In an embodiment, the electrical parameter of the electrical grid is a voltage or current of the electrical grid.

In an embodiment, the at least one parameter is any one of the power control error, the output power of the power converter, or the reference power.

In an embodiment, the phase angle is a combination, in particular a linear combination, of an integral of the rotational frequency of the inertia model and the at least one control signal.

In an embodiment, the machine is a synchronous generator.

In an embodiment, the inertia model is a mathematical model of the inertia of the synchronous generator.

In an embodiment, a virtual synchronous machine, VSM, is or comprises the inertia model, and wherein the power converter is controlled based on the VSM.

The present disclosure also relates to a computer-readable medium, for controlling a power converter coupled to an electrical grid, carrying instructions to perform the method of any one of the above-described embodiments.

The present disclosure further relates to a system, for controlling a power converter coupled to an electrical grid, comprising the power converter, the electrical grid, and the device and/or the computer-readable medium of any one of the above-described embodiments.

Various exemplary embodiments of the present disclosure are directed to providing features that will become readily apparent by reference to the following description when taken in conjunction with the accompanying drawings. In accordance with various embodiments, exemplary systems, methods, and devices are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

In the following, exemplary embodiments of the present disclosure will be described. It is noted that some aspects of any one of the described embodiments may also be found in some other embodiments unless otherwise stated or obvious. However, for increased intelligibility, each aspect will only be described in detail when first mentioned and any repeated description of the same aspect will be omitted.

The above and other aspects and their implementations are described in greater detail in the drawings, the descriptions, and the claims.

### Brief Description of the Drawings

Fig. 1 illustrates a synchronous generator and control system.
Fig. 2 illustrates a load sharing in parallel connected generators.
Fig. 3 illustrates a three-phase power electronic inverter with controller.
Fig. 4 illustrates a virtual synchronous machine control system.
Fig. 5 a) illustrates an equivalent model of a power system and Fig. 5 b) illustrates a respective phasor diagram according to an embodiment of the present disclosure.
Fig. 6 a) illustrates a control block diagram of a virtual synchronous machine connected to a power system. Fig. 6 b) illustrates a pole-zero map of a control loop illustrated in the control block diagram. Fig. 6 c) illustrates a step response of the control loop illustrated in the control block diagram.
Fig. 7 illustrates a measurement of a system implementing the control block of Fig. 6 a).
Fig. 8 illustrates a flowchart of a method according to an embodiment of the present disclosure.
Fig. 9 a) illustrates a control blocks diagram for a power system according to an embodiment of the present disclosure. Fig. 9 b) illustrates a control blocks diagram for a power system according to an embodiment of the present disclosure. Fig. 9 c) illustrates a control blocks diagram for a power system according to an embodiment of the present disclosure.
Fig. 10 a) to c) illustrate pole-zero maps of the control blocks of any one of Fig. 9 a) to c) with a varying control parameter according to an embodiment of the present disclosure.
Fig. 11 a) to c) illustrate step responses of the control blocks of any one of Fig. 9 a) to c) having respective pole-zero maps as illustrated in Fig. 10 a) to c).
Fig. 12 a) illustrates a device according to an embodiment of the present disclosure. Fig. 12 b) illustrates a system according to an embodiment of the present disclosure.

### Detailed Description of the Disclosure

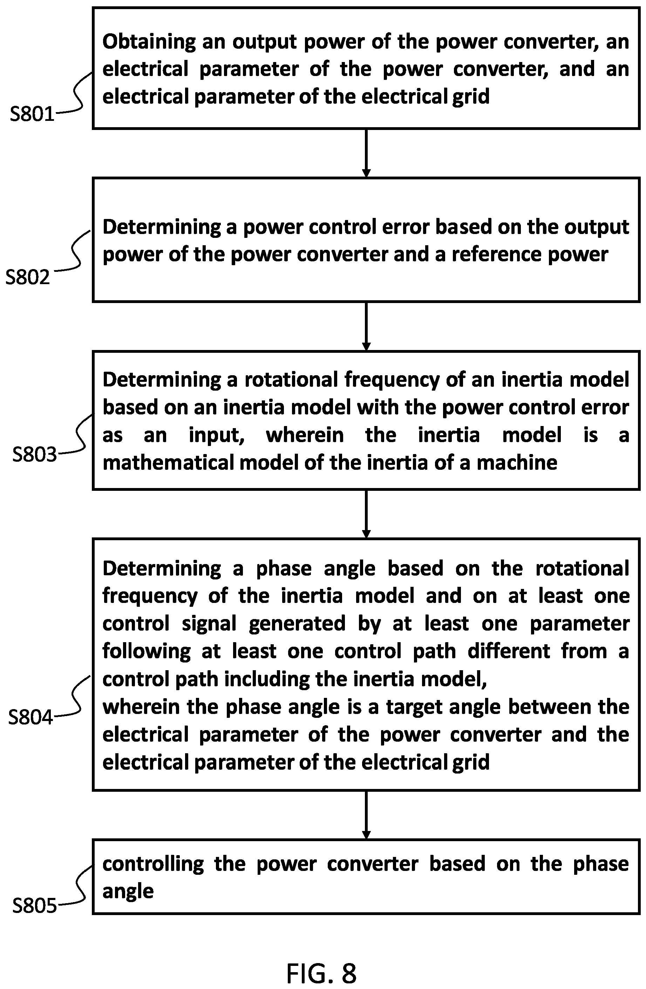

Fig. 8 illustrates a flowchart of a method according to an embodiment of the present disclosure. At S801, an output power of the power converter, an electrical parameter of the power converter, and an electrical parameter of the electrical grid are obtained. The term 'obtaining' may bear the same meaning as, thusly can be interchangeably used with, terms such as, but not limited to, 'receiving', 'measuring', or the like. In an embodiment, the electrical parameter of the power converter is a voltage or current of the power converter. In an embodiment, the electrical parameter of the electrical grid is a voltage or current of the electrical grid. In an embodiment, the at least one parameter is any one of the power control error, the output power of the power converter, or the reference power. At S802, a power control error is determined based on the output power of the power converter and a reference power. At S803, a rotational frequency of an inertia model is determined based on an inertia model with the power control error as an input, wherein the inertia model is a mathematical model of the inertia of a machine. At S804, a phase angle is determined based on the rotational frequency of the inertia model and on at least one control signal generated by at least one parameter following at least one control path different from a control path including the inertia model, wherein the phase angle is a target angle between the electrical parameter of the power converter and the electrical parameter of the electrical grid. At S805 the power converter is controlled based on the phase angle.

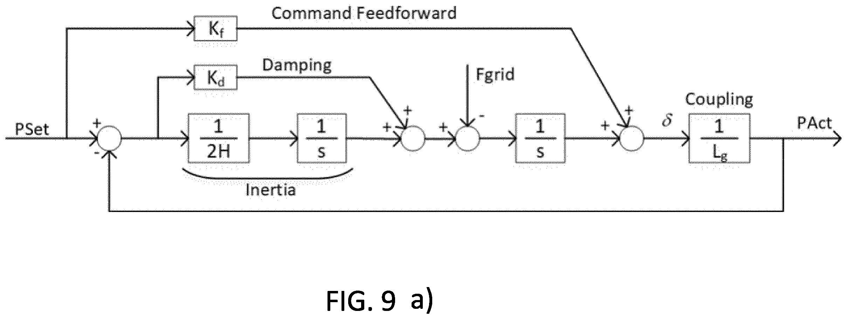

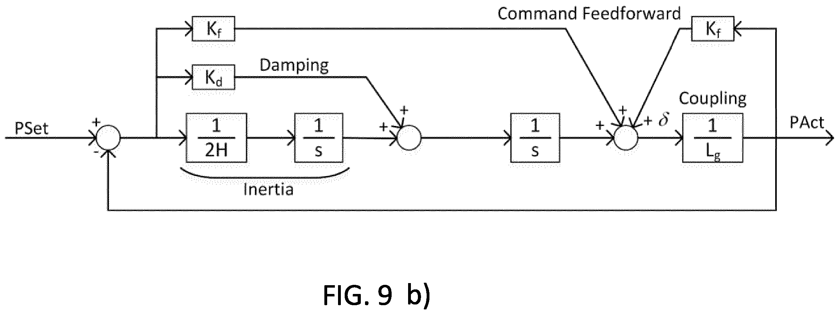

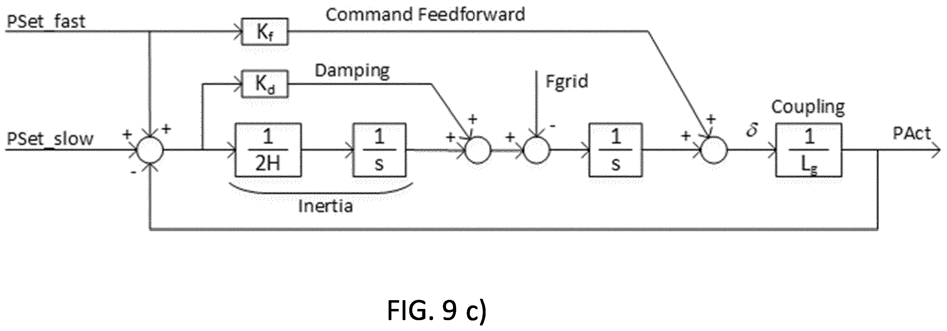

Fig. 9 a) to c) illustrate control block diagrams for a power system according to an embodiment of the present disclosure. For instance, the power system is the modelled power system shown in Fig. 5 a) with the relations of the electrical parameters of the system following Fig. 5 b). Fig. 9 a) - c) illustrate non-limiting variants of a method for controlling a power converter. That is, Fig. 9 a) illustrates a control blocks diagram for a power system according to an embodiment of the present disclosure. Fig. 9 b) illustrates another control blocks diagram for a power system according to an embodiment of the present disclosure. Fig. 9 c) illustrates yet another control blocks diagram for a power system according to an embodiment of the present disclosure.

The control scheme of Fig. 9 a) obtains an output power of the power converter *P_{Act},* voltage of the power converter, and the voltage of the electrical parameter of the electrical grid. The obtained voltages of the power converter and/or the electrical grid may be any other electrical parameter, e.g., current, and/or be vector quantities. A reference power *P_{Set}* is used together with *P_{Act}* to determine a power control error. Also, *P_{Set}* follows a feed-forward path different from the control path including the inertia model of a machine, i.e., in this embodiment, at least one parameter following at least one path different from a control path including the inertia model is the reference power *P_{Set}*. This is shown in Fig. 9 a) with *P_{Set}* command feedforward gain *K_{f}* shown at the top of the diagram. The inertia model of the machine is represented with control blocks comprising (1/2H) and (1/s). It is understood by the skilled person that inertia model may be modelled differently and accordingly the control loop of Fig. 9 a), in particular the control block concerning the inertia of the machine, may be implemented differently. The machine may be a synchronous generator, and accordingly the inertia model may a mathematical model of the inertia of the synchronous generator. A virtual synchronous machine, VSM, may be or comprise the inertia model, and the power converter may be controlled based on the VSM. It is evident from the disclosure herein that the added command feedforward path allows *P_{Set}* to circumvent the inertia model of the machine, which in turn directly and immediately changes the power angle δ. Such feature may advantageously speed up the command response, i.e., the controlled parameter, *P_{Act},* converges faster to *P_{Set}* compared to the control loop without the added feedforward path. The resulting feedforward command may be a control signal generated by at least one parameter following at least one control path different from a control path including the inertia model. In the embodiment, a control path including a damping model comprising damping parameter *K_{d}* is shown. Also, the frequency of the grid *F_{grid}* is a mathematical construct to aid the analysis and thusly is shown for completeness, but may be omitted from the control system analysis, as done in the calculations disclosed herein. Mathematically, a transfer function of the SBD of Fig. 9 a) is as follows: $TF = \frac{{P}_{Act}}{{P}_{Set}} = \frac{\left(2{HK}_{f}\right) {s}^{2} + \left(2{HK}_{d}\right) s + 1}{\left(2{HL}_{g}\right) {s}^{2} + \left(2{HK}_{d}\right) s + 1}$ (11) with characteristic equation $\left(2{HL}_{g}\right) {s}^{2} + \left(2{HK}_{d}\right) s + 1$ (12) resonant frequency ${ω}_{0} = \sqrt{\frac{1}{2 {HL}_{g}}}$ (13) and damping coefficient $ξ = \frac{{K}_{d}}{2 {L}_{g} \sqrt{\frac{1}{2 {HL}_{g}}}}$ (14) with critical damping being equal to ${K}_{d , o} = 2 {L}_{g} \sqrt{\frac{1}{2 {HL}_{g}}}$ (15)

Comparing eq.(7) with eq.(11) shows that the addition of feedforward gain *K_{f}* adds a 2^{nd} order term to the numerator. Accordingly, a desirable transfer function may be achieved, in particular by adjusting feedforward gain *K_{f}* in relation to *L_{g}*. For instance, *K_{f}* may be adjusted based on, as a ratio to, or in relation to *L_{g},* in particular, *K_{f} = αL_{g},* wherein *α* is a rational number, in particular between 0 and 2, more particularly 1. When *K_{f} = L_{g},* a closed-loop forward gain of unity is achieved, which in turn results in an instantaneous response to a step input, the controlled parameter, *P_{Act},* converges to *P_{Set}* instantaneously. Moreover, as the feedforward path is outside of the closed loop, i.e., *δ* is determined by *P_{Set}* following the control path including *K_{f}* rather than the power control error following the control path including *K_{f},* the disturbance response is unchanged thusly tuneable, in the same manner as in the SBD without the feedforward path, with the use of *K_{d}*. Such disturbance response may be desirable for grid-forming inverters during the grid transition to net-zero emissions.

Fig. 9 b) illustrates another embodiment of the SBD. In reference to Fig. 9 b), two parameters follow two different feedforward paths, namely the power control error *P_{Set} - P_{Act}* following a first feedforward path including a first feedforward block comprising the feedforward gain *K_{f}* and the *P_{Act}* following a second feedforward path including the feedforward block comprising the feedforward gain *K_{f}*. Nevertheless, mathematically, the SBD of Fig. 9 b) yields the same transfer function as the SBD of Fig. 9 a), i.e., eq.(11). Thus, it is evident that any other non-limiting SBD variant having a transfer function of eq.(11) may be implemented.

Fig. 9 c) illustrates another embodiment of the SBD involving a plurality of *P_{Set},* namely a first power reference *P*_{*Set*_*fast*} and a second power reference *P*_{*Set*_*slow*}. The number of power reference terms and/or the number of the power control errors determined based thereon may not be limited to two. The power control error is determined by linearly combining the output power of the power converter *P_{Act},* the first power reference *P*_{*Set*_}*_{fast},* and the second power reference *P*_{*Set*_*slow*}. The first power reference *P*_{*Set*_*fast*} follows the feedforward path including the feedforward block comprising the feedforward gain *K_{f}*. It is evident that the control block diagram of Fig. 9 a) is mathematically equivalent to the control block diagram of Fig. 9 c) with *P*_{*Set*_*slow*} = 0.

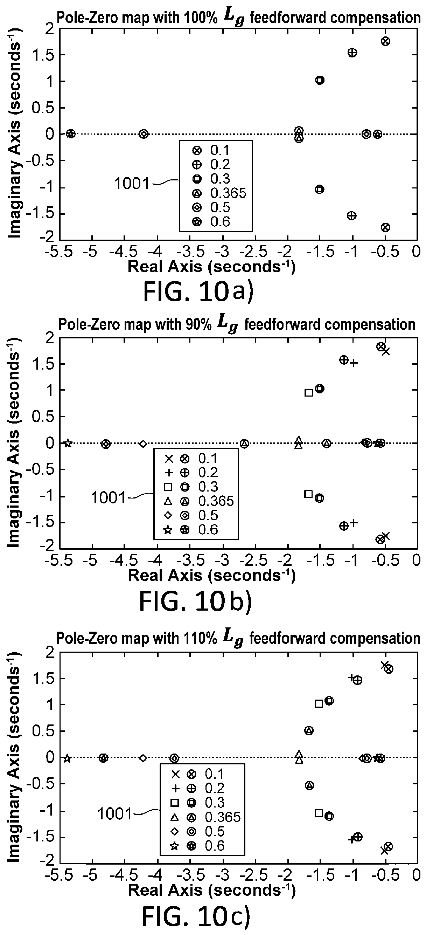

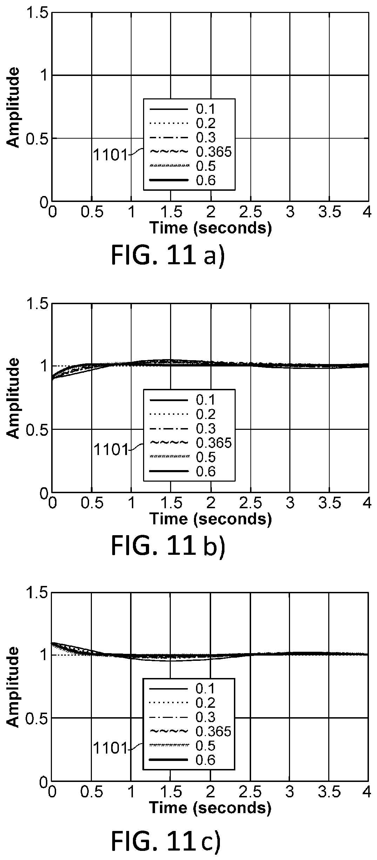

Fig. 10 a) to c) illustrate pole-zero maps of the control blocks of any one of Fig. 9 a) to c) with a varying control parameter according to an embodiment of the present disclosure. In particular, Fig. 10 a) illustrates a pole-zero map of the control blocks diagram illustrated in any of Fig. 9 a), Fig. 9 b), or Fig. 9 c) with a feedforward gain set to 100% of the coupling value. Fig. 10 b) illustrates a pole-zero map of the control blocks diagram illustrated in any of Fig. 9 a), Fig. 9 b), or Fig. 9 c) with a feedforward gain set to 90% of the coupling value. Fig. 10 a) illustrates a pole-zero map of the control blocks diagram illustrated in any of Fig. 9 a), Fig. 9 b), or Fig. 9 c) with a feedforward gain set to 110% of the coupling value. In particular, a system with inertia set to 1.5 seconds, and the effective inductive coupling set to 0.1 pu was analysed with various values of damping parameter *K_{d}*. As discussed earlier, the inclusion of the feedforward path, as shown in the exemplary embodiments of Fig. 9 a) to c), introduces the 2^{nd} order term in its transfer function, i.e., introduces a set of zeros. For the case shown in Fig. 10 a) the feedforward gain was set to 100% of the coupling value, i.e., *K_{f} = L_{g}*. Consequently, regardless of the value of the damping parameter *K_{d}*, the zeros of the numerator completely cancel the poles from the denominator, achieving a unity gain in transfer function. The cancelation of zeros and poles are illustrated in Fig. 10 a) with completely overlapping positions of the poles and zeros with varying values 1001 of the damping parameter *K_{d}*. Fig. 10 b) shows the pole-zero map with *K_{f}* = 0.9 × *L_{g},* i.e., undercompensated feedforward gain, and with various values 1001 of the damping parameter *K_{d}*. It is noted that poles no longer overlap with zeros. The proximity of the locations of the pole-zero pairs corresponds to the closeness of the match between *K_{f}* and *L_{g}*. Fig. 10 c) shows the pole-zero map with *K_{f}* = 1.1 × *L_{g},* i.e., overcompensated feedforward gain, and again each pole has a corresponding zero close by, partially nulling its effect. Fig. 11 illustrates a step response of the control blocks of Fig. 9 with a varying control parameter according to an embodiment of the present disclosure. To be specific, Fig. 11 a) to c) illustrate step responses of the control blocks of any one of Fig. 9 a) to c) having respective pole-zero maps as illustrated in Fig. 10 a) to c).

Fig. 11 a) illustrates the step response of the system with complete pole-zero cancelation illustrated in Fig. 10 a) for various values 1101 of the damping parameter *K_{d}*. It is noted that since all the poles of the system are nullified by corresponding zeroes there is perfect response with no transient, i.e., for an instant step change at *t* = 0s in *P_{Set},* the output of the power converter *P_{Act}* converges instantly to *P_{Set}*. It is noted however that the output of the power converter *P_{Act}* is a control parameter and the change in actual output of the power converter may be limited, in particular due to physical and electrical limiting factors such as the limited rate of change of currents at the output of the power converter thusly exhibiting a transient behaviour particularly in the order of half of the fundamental frequency of the system frequency. For instance, a transient behaviour may comprise a rise time or a settling time of 10ms for a 50Hz system. In comparison, a method without the feedforward path of the present disclosure achieves a rise time or a settling time of 500 ms. Fig. 11 b) illustrates the step response of the under-compensated system illustrated in Fig. 10 b) for various values 1101 of the damping parameter *K_{d}*. In this case the initial step is 90% compensated so the instantaneous response is 90% of the final value. Eventually the system comes to the expected steady-state value, with the transient response of the missing 10% having the same characteristics as the non-compensated system. Fig. 11 c) illustrates the step response of the over-compensated system illustrated in Fig. 10 c) for various values 1101 of the damping parameter *K_{d}*. In this case the instantaneous response is 110% of the setpoint, with excess 10% having a similar transient to the previous case. It is noted that in all three cases illustrated in Fig. 11 a) to c), the correct steady-state value is reached, and the initial response error is only as big as the compensation error. In other words, the compensation does not have to be perfect to achieve the desired result of faster response.

It is evident particularly from the embodiments shown in Fig. 10 a) to c)Fig. 11 a) to c) that the transient performance of the system depends on the value of the feedforward gain *K_{f},* in particular in relation to the coupling parameter *L_{g}* (also referred to as the coupling term) in the coupling model. The coupling model is a mathematical model of an electrical coupling of the power converter to the electrical grid. The coupling term may be expressed in terms of a coupling impedance comprising an impedance at the output of the power converter and an impedance at the coupled port of the electrical grid. For instance, the impedance R *+ jX* of Fig. 5 a) may be an equivalent impedance for the impedance at the output of the power converter and an impedance at the coupled port of the electrical grid. The impedance at the output of the power converter may be a VSM virtual inductance and the impedance at the coupled port of the electrical grid may be a Thevenin equivalent inductance of the grid. The grid inductance may comprise of any combination of the following: leakage of coupling transformer(s); impedance of the transmission lines; stator leakage of synchronous generators online; other generation sources online. Accordingly, the value of *X* may change over time. In an inductance-dominated grid, i.e., *Z = R + jX* ≈ *jX,* the real power flow from the GFMI voltage source is given by: ${P}_{A} \approx \frac{{V}_{A} {V}_{G}}{X} δ$ (16) and rearranging eq.(16) in terms of *X* yields: $X \approx \frac{{V}_{A} {V}_{G}}{{P}_{A}} δ$ (17) wherein, *P_{A}* and *V_{A}* may be measured locally, i.e., the said parameter is of the GFMI with an internal voltage source which can be measured, and *V_{G},* the Thevenin equivalent grid voltage source, can be estimated based on the reactive power. However, it may not be possible to measure *δ*. The differential form of eq.(17) is as follows: $X \approx \frac{{V}_{A} {V}_{G}}{Δ {P}_{A}} Δ δ$ (18)

Accordingly, *X* can be determined by measuring Δ*P_{A}, V_{A},* and Δ*δ* within the GFMI/VSM controller and estimating *V_{G}.* In an embodiment, *K_{f}* is determined based on the determined *X,* in particular by adjusting *K_{f}* based on, as a ratio to, or in relation to the determined *X,* more particularly, *K_{f}* = *βX,* wherein *β* is a rational number, in particular between 0 and 2, more particularly 1. In an embodiment, *K_{f}* is determined adaptive to the coupling inductance value, *X.* In an embodiment, the value of the coupling inductance, *X,* is determined adaptive to *δ*, in particular when the Thevenin equivalent line impedance changes.

In an embodiment, *X* is iteratively updated while online, i.e., when the GFMI is in operation, in particular by comparing an expected value for Δδ and an actual value required to achieve Δ*P_{A}*. In an embodiment, when the actual value of Δδ is higher than expected, the estimate of *X* is increased. In an embodiment, when the actual value of Δδ is lower than expected, the estimate of *X* is lowered.

In an embodiment, the coupling inductance value, *X,* is determined adaptively based on any combination of the above-described embodiments. In an embodiment, *K_{f}* is determined adaptively based on any combination of the above-described embodiments.

In an embodiment, the feedforward control block comprises a feedforward parameter which is determined based on the coupling parameter.

In an embodiment, before an operation of the power converter, the output power of the power converter is a pre-set value or a modelled output of a closed feedback control loop receiving the reference power as an input.

In an embodiment, during the operation of the power converter, the output power of the power converter is updated, in particular based on the output power of the power converter measured during the operation of the power converter.

In an embodiment, the coupling impedance is a pre-set value determined before an operation of the power converter.

In an embodiment, the coupling impedance is determined, in particular adaptively and/or iteratively during the operation of the power converter, based on a differential phase angle in two iterations and the differential output power of the power converter in the two iterations.

In an embodiment, the coupling impedance is determined, in particular adaptively and/or iteratively during the operation of the power converter, based on the determined phase angle and a reference expected phase angle.

In an embodiment, the method further comprises updating, in particular iteratively, the coupling parameter based on the coupling impedance.

In an embodiment, the method further comprises updating, in particular iteratively, the feedforward control block based on the coupling parameter.

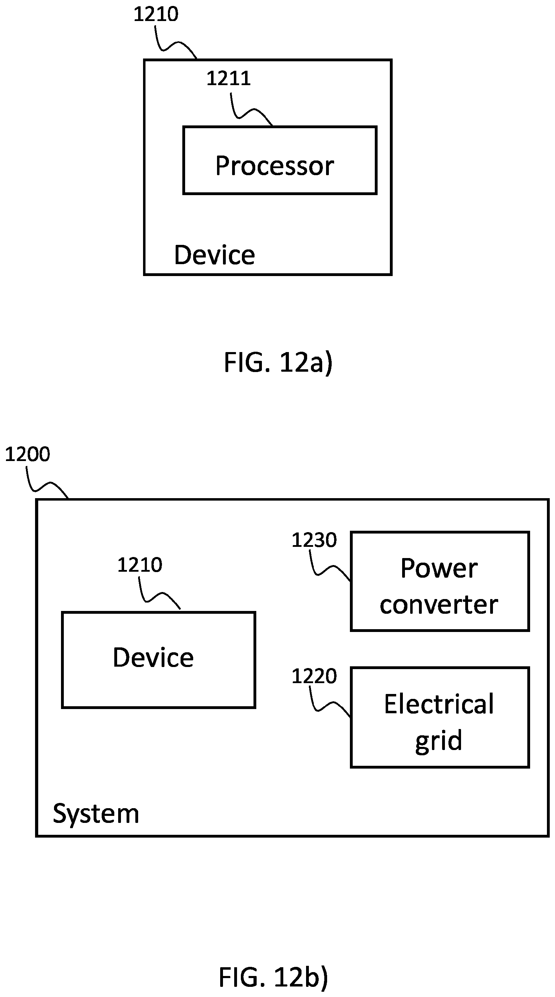

Fig. 12 a) illustrates a device 1210 for controlling a power converter coupled to an electrical grid, the device 1210 comprising a processor 1211 being configured to: obtain an output power of the power converter 1230, an electrical parameter of the power converter 1230, and an electrical parameter of the electrical grid 1220; determine a power control error based on the output power of the power converter 1230 and a reference power; determine a rotational frequency of an inertia model based on an inertia model with the power control error as an input, wherein the inertia model is a mathematical model of the inertia of a machine; determine a phase angle based on the rotational frequency of the inertia model and on at least one control signal generated by at least one parameter following at least one control path different from a control path including the inertia model, wherein the phase angle is a target angle between the electrical parameter of the power converter and the electrical parameter of the electrical grid 1220; and control the power converter 1230 based on the phase angle.

Fig. 12 b) illustrates a system 1200 for controlling a power converter coupled to an electrical grid, comprising the power converter 1230, the electrical grid 1220, and the device 1210 of any one of the above-described embodiments. In an embodiment, the system comprises a computer-readable medium, for controlling a power converter coupled to an electrical grid, carrying instructions to perform the method of any one of the above-described embodiments. In an embodiment, the computer-readable medium is or replaces the device.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative methods, logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A method for controlling a power converter coupled to an electrical grid, the method comprising:
obtaining (S801) an output power of the power converter, an electrical parameter of the power converter, and an electrical parameter of the electrical grid;
determining (S802) a power control error based on the output power of the power converter and a reference power;
determining (S803) a rotational frequency of an inertia model based on an inertia model with the power control error as an input, wherein the inertia model is a mathematical model of the inertia of a machine;
determining (S804) a phase angle based on the rotational frequency of the inertia model and on at least one control signal generated by at least one parameter following at least one control path different from a control path including the inertia model,
wherein the phase angle is a target angle between the electrical parameter of the power converter and the electrical parameter of the electrical grid;
wherein a further control path different from the at least one control path comprises a damping model taking the power control error as an input, wherein the damping model is a mathematical model of the damping of the machine, and wherein the rotational frequency is determined based further on the output of the damping model; and
controlling (S805) the power converter based on the phase angle.

2. The method of claim 1, wherein the at least one control path different from the control path including the inertial model is a feedforward path including a feedforward control block.

3. The method of claim 1 or 2, further comprising:
obtaining the output power of the power converter based on a coupling model with the phase angle as an input,
wherein the coupling model is a mathematical model of an electrical coupling of the power converter to the electrical grid, and
wherein the coupling model comprises a coupling term expressed in terms of a coupling impedance comprising an impedance at the output of the power converter and an impedance at the coupled port of the electrical grid; and
controlling the power converter based on the obtained output power of the power converter.

4. The method of claim 3, wherein the feedforward control block comprises a feedforward parameter which is determined based on a coupling parameter.

5. The method of claim 3 or 4, wherein, before an operation of the power converter, the output power of the power converter is a pre-set value or a modelled output of a closed feedback control loop receiving the reference power as an input, and wherein, during the operation of the power converter, the output power of the power converter is updated, in particular based on the output power of the power converter measured during the operation of the power converter.

6. The method of any one of claims 3 to 5, wherein the coupling impedance is:
a pre-set value determined before an operation of the power converter;
determined, in particular adaptively and/or iteratively during the operation of the power converter, based on a differential phase angle in two iterations and the differential output power of the power converter in the two iterations; and/or
determined, in particular adaptively and/or iteratively during the operation of the power converter, based on the determined phase angle and a reference expected phase angle.

7. The method of claim 6 further comprising updating, in particular iteratively, a coupling parameter based on the coupling impedance.

8. The method of claim 7, further comprising updating, in particular iteratively, the feedforward control block based on the coupling parameter.

9. The method of any one of claims 1 to 8, wherein
the electrical parameter of the power converter is a voltage or current of the power converter,
the electrical parameter of the electrical grid is a voltage or current of the electrical grid, and/or
the at least one parameter is any one of the power control error, the output power of the power converter, or the reference power.

10. The method of any one of claims 1 to 9, wherein the phase angle is a combination, in particular a linear combination, of an integral of the rotational frequency of the inertia model and the at least one control signal.

11. The method of any one of claims 1 to 10, wherein the machine is a synchronous generator, and wherein the inertia model is a mathematical model of the inertia of the synchronous generator.

12. The method of claim 11, wherein a virtual synchronous machine, VSM, is or comprises the inertia model, and wherein the power converter is controlled based on the VSM.

13. A device (1210) for controlling a power converter coupled to an electrical grid, the device comprising a processor (1211) being configured to:
obtain an output power of the power converter (1230), an electrical parameter of the power converter (1230), and an electrical parameter of the electrical grid (1220);
determine a power control error based on the output power of the power converter (1230) and a reference power;
determine a rotational frequency of an inertia model based on an inertia model with the power control error as an input, wherein the inertia model is a mathematical model of the inertia of a machine;
determine a phase angle based on the rotational frequency of the inertia model and on at least one control signal generated by at least one parameter following at least one control path different from a control path including the inertia model,
wherein the phase angle is a target angle between the electrical parameter of the power converter (1230) and the electrical parameter of the electrical grid (1220);
wherein a further control path different from the at least one control path comprises a damping model taking the power control error as an input, wherein the damping model is a mathematical model of the damping of the machine, and wherein the rotational frequency is determined based further on the output of the damping model; and
control the power converter based on the phase angle.

14. A computer-readable medium, for controlling a power converter coupled to an electrical grid, carrying instructions to perform the method of any one of claims 1 to 12.

## Patentansprüche

1. Verfahren zum Steuern eines Stromrichters, der mit einem elektrischen Netz gekoppelt ist, wobei das Verfahren aufweist:
Erhalten (S801) einer Ausgangsleistung des Stromrichters, eines elektrischen Parameters des Stromrichters und eines elektrischen Parameters des elektrischen Netzes;
Bestimmen (S802) eines Leistungssteuerfehlers basierend auf der Ausgangsleistung des Stromrichters und einer Referenzleistung;
Bestimmen (S803) einer Drehfrequenz eines Trägheitsmodells basierend auf einem Trägheitsmodell mit dem Leistungssteuerfehler als eine Eingabe, wobei das Trägheitsmodell ein mathematisches Modell der Trägheit einer Maschine ist;
Bestimmen (S804) eines Phasenwinkels basierend auf der Drehfrequenz des Trägheitsmodells und auf mindestens einem Steuersignal, das durch mindestens einen Parameter erzeugt wird, der mindestens einem Steuerpfad folgt, der sich von einem Steuerpfad unterscheidet, der das Trägheitsmodell beinhaltet,
wobei der Phasenwinkel ein Zielwinkel zwischen dem elektrischen Parameter des Stromrichters und dem elektrischen Parameter des elektrischen Netzes ist;
wobei ein weiterer Steuerpfad, der sich von dem mindestens einen Steuerpfad unterscheidet, ein Dämpfungsmodell aufweist, das den Leistungssteuerfehler als eine Eingabe nimmt, wobei das Dämpfungsmodell ein mathematisches Modell der Dämpfung der Maschine ist und wobei die Drehfrequenz ferner basierend auf der Ausgabe des Dämpfungsmodells bestimmt wird; und
Steuern (S805) des Stromrichters basierend auf dem Phasenwinkel.

2. Verfahren nach Anspruch 1, wobei der mindestens eine Steuerpfad, der sich von dem Steuerpfad einschließlich des Trägheitsmodells unterscheidet, ein Vorwärtskopplungspfad einschließlich eines Vorwärtskopplungssteuerblocks ist.

3. Verfahren nach Anspruch 1 oder 2, ferner aufweisend:
Erhalten der Ausgangsleistung des Stromrichters basierend auf einem Kopplungsmodell mit dem Phasenwinkel als eine Eingabe,
wobei das Kopplungsmodell ein mathematisches Modell einer elektrischen Kopplung des Stromrichters mit dem elektrischen Netz ist, und
wobei das Kopplungsmodell einen Kopplungsterm aufweist, der in Form einer Kopplungsimpedanz ausgedrückt ist, die eine Impedanz am Ausgang des Stromrichters und eine Impedanz am gekoppelten Anschluss des elektrischen Netzes aufweist; und
Steuern des Stromrichters basierend auf der erhaltenen Ausgangsleistung des Stromrichters.

4. Verfahren nach Anspruch 3, wobei der Vorwärtskopplungssteuerblock einen Vorwärtskopplungsparameter aufweist, der basierend auf einem Kopplungsparameter bestimmt wird.

5. Verfahren nach Anspruch 3 oder 4, wobei die Ausgangsleistung des Stromrichters vor einem Betrieb des Stromrichters ein voreingestellter Wert oder eine modellierte Ausgabe eines Regelkreises mit geschlossener Rückkopplung ist, der die Referenzleistung als eine Eingabe empfängt, und wobei während des Betriebs des Stromrichters die Ausgangsleistung des Stromrichters aktualisiert wird, insbesondere basierend auf der Ausgangsleistung des Stromrichters, die während des Betriebs des Stromrichters gemessen wird.

6. Verfahren nach einem der Ansprüche 3 bis 5, wobei die Kopplungsimpedanz:
ein voreingestellter Wert ist, der vor einem Betrieb des Stromrichters bestimmt wird;
bestimmt wird, insbesondere adaptiv und/oder iterativ während des Betriebs des Stromrichters, basierend auf einem differenziellen Phasenwinkel in zwei Iterationen und der differenziellen Ausgangsleistung des Stromrichters in den zwei Iterationen; und/oder
bestimmt wird, insbesondere adaptiv und/oder iterativ während des Betriebs des Stromrichters, basierend auf dem bestimmten Phasenwinkel und einem erwarteten Referenzphasenwinkel.

7. Verfahren nach Anspruch 6, ferner aufweisend Aktualisieren, insbesondere iterativ, eines Kopplungsparameters basierend auf der Kopplungsimpedanz.

8. Verfahren nach Anspruch 7, ferner aufweisend Aktualisieren, insbesondere iterativ, des Vorwärtskopplungssteuerblocks basierend auf dem Kopplungsparameter.

9. Verfahren nach einem der Ansprüche 1 bis 8, wobei der elektrische Parameter des Stromrichters eine Spannung oder ein Strom des Stromrichters ist,
der elektrische Parameter des elektrischen Netzes eine Spannung oder ein Strom des elektrischen Netzes ist, und/oder
der mindestens eine Parameter ein Beliebiges des Leistungssteuerfehlers, der Ausgangsleistung des Stromrichters oder der Referenzleistung ist.

10. Das Verfahren nach einem der Ansprüche 1 bis 9, wobei der Phasenwinkel eine Kombination, insbesondere eine lineare Kombination, eines Integrals der Drehfrequenz des Trägheitsmodells und des mindestens einen Steuersignals ist.

11. Verfahren nach einem der Ansprüche 1 bis 10, wobei die Maschine ein Synchrongenerator ist und wobei das Trägheitsmodell ein mathematisches Modell der Trägheit des Synchrongenerators ist.

12. Verfahren nach Anspruch 11, wobei eine virtuelle synchrone Maschine, VSM, das Trägheitsmodell ist oder aufweist und wobei der Stromrichter basierend auf dem VSM gesteuert wird.

13. Vorrichtung (1210) zum Steuern eines Stromrichters, der mit einem elektrischen Netz gekoppelt ist, wobei die Vorrichtung einen Prozessor (1211) aufweist, der eingerichtet ist zum:
Erhalten einer Ausgangsleistung des Stromrichters (1230), eines elektrischen Parameters des Stromrichters (1230) und eines elektrischen Parameters des elektrischen Netzes (1220);
Bestimmen eines Leistungssteuerfehlers basierend auf der Ausgangsleistung des Stromrichters (1230) und einer Referenzleistung;
Bestimmen einer Drehfrequenz eines Trägheitsmodells basierend auf einem Trägheitsmodell mit dem Leistungssteuerfehler als eine Eingabe, wobei das Trägheitsmodell ein mathematisches Modell der Trägheit einer Maschine ist;
Bestimmen eines Phasenwinkels basierend auf der Drehfrequenz des Trägheitsmodells und auf mindestens einem Steuersignal, das durch mindestens einen Parameter erzeugt wird, der mindestens einem Steuerpfad folgt, der sich von einem Steuerpfad unterscheidet, der das Trägheitsmodell beinhaltet,
wobei der Phasenwinkel ein Zielwinkel zwischen dem elektrischen Parameter des Stromrichters (1230) und dem elektrischen Parameter des elektrischen Netzes (1220) ist;
wobei ein weiterer Steuerpfad, der sich von dem mindestens einen Steuerpfad unterscheidet, ein Dämpfungsmodell aufweist, das den Leistungssteuerfehler als eine Eingabe nimmt, wobei das Dämpfungsmodell ein mathematisches Modell der Dämpfung der Maschine ist und wobei die Drehfrequenz ferner basierend auf der Ausgabe des Dämpfungsmodells bestimmt wird; und
Steuern des Stromrichters basierend auf dem Phasenwinkel.

14. Computerlesbares Medium zum Steuern eines Stromrichters, der mit einem elektrischen Netz gekoppelt ist, das Anweisungen zum Durchführen des Verfahrens nach einem der Ansprüche 1 bis 12 trägt.

## Revendications

1. Un procédé de commande d'un convertisseur de puissance couplé à un réseau électrique, le procédé comprenant :
l'obtention (S801) d'une puissance de sortie du convertisseur de puissance, d'un paramètre électrique du convertisseur de puissance et d'un paramètre électrique du réseau électrique ;
la détermination (S802) d'une erreur de commande de puissance sur la base de la puissance de sortie du convertisseur de puissance et d'une puissance de référence ;
la détermination (S803) d'une fréquence de rotation d'un modèle d'inertie sur la base d'un modèle d'inertie recevant l'erreur de commande de puissance en entrée, le modèle d'inertie étant un modèle mathématique de l'inertie d'une machine ;
la détermination (S804) d'un angle de phase sur la base de la fréquence de rotation du modèle d'inertie et d'au moins un signal de commande généré par au moins un paramètre suivant au moins un trajet de commande, différent d'un trajet de commande comportant le modèle d'inertie,
dans lequel l'angle de phase est un angle cible entre le paramètre électrique du convertisseur de puissance et le paramètre électrique du réseau électrique ;
dans lequel un trajet de commande supplémentaire, différent de l'au moins un trajet de commande, comprend un modèle d'amortissement prenant l'erreur de commande de puissance en entrée, le modèle d'amortissement étant un modèle mathématique de l'amortissement de la machine, et la fréquence de rotation étant déterminée sur la base en outre de la sortie du modèle d'amortissement ; et
la commande (S805) du convertisseur de puissance sur la base de l'angle de phase.

2. Le procédé selon la revendication 1, dans lequel l'au moins un trajet de commande, différent du trajet de commande comportant le modèle d'inertie, est un trajet à action anticipative comportant un bloc de commande à action anticipative.

3. Le procédé selon la revendication 1 ou 2, comprenant en outre :
l'obtention de la puissance de sortie du convertisseur de puissance sur la base d'un modèle de couplage recevant l'angle de phase en entrée,
dans lequel le modèle de couplage est un modèle mathématique d'un couplage électrique du convertisseur de puissance au réseau électrique, et
dans lequel le modèle de couplage comprend un terme de couplage exprimé en fonction d'une impédance de couplage comprenant une impédance au niveau de la sortie du convertisseur de puissance et une impédance au niveau du port couplé du réseau électrique ; et
la commande du convertisseur de puissance sur la base de la puissance de sortie obtenue du convertisseur de puissance.

4. Le procédé selon la revendication 3, dans lequel le bloc de commande à action anticipative comprend un paramètre d'action anticipative qui est déterminé sur la base d'un paramètre de couplage.

5. Le procédé selon la revendication 3 ou 4, dans lequel, avant un fonctionnement du convertisseur de puissance, la puissance de sortie du convertisseur de puissance est une valeur prédéfinie ou une sortie modélisée d'une boucle de commande à rétroaction fermée recevant la puissance de référence en entrée, et dans lequel, pendant le fonctionnement du convertisseur de puissance, la puissance de sortie du convertisseur de puissance est mise à jour, en particulier sur la base de la puissance de sortie du convertisseur de puissance mesurée pendant le fonctionnement du convertisseur de puissance.

6. Le procédé de l'une quelconque des revendications 3 à 5, dans lequel l'impédance de couplage est :
une valeur prédéfinie déterminée avant un fonctionnement du convertisseur de puissance ;
déterminée, en particulier de manière adaptative et/ou itérative pendant le fonctionnement du convertisseur de puissance, sur la base d'un angle de phase différentiel sur deux itérations et de la puissance de sortie différentielle du convertisseur de puissance sur les deux itérations ; et/ou
déterminée, en particulier de manière adaptative et/ou itérative pendant le fonctionnement du convertisseur de puissance, sur la base de l'angle de phase déterminé et d'un angle de phase de référence attendu.

7. Le procédé selon la revendication 6, comprenant en outre la mise à jour, en particulier de manière itérative, d'un paramètre de couplage sur la base l'impédance de couplage.

8. Le procédé selon la revendication 7, comprenant en outre la mise à jour, en particulier de manière itérative, du bloc de commande à action anticipative sur la base du paramètre de couplage.

9. Le procédé selon l'une quelconque des revendications 1 à 8, dans lequel
le paramètre électrique du convertisseur de puissance est une tension ou un courant du convertisseur de puissance, le paramètre électrique du réseau électrique est une tension ou un courant du réseau électrique, et/ou
l'au moins un paramètre est l'un quelconque des paramètres suivants : l'erreur de commande de puissance, la puissance de sortie du convertisseur de puissance ou la puissance de référence.

10. Le procédé selon l'une quelconque des revendications 1 à 9, dans lequel l'angle de phase est une combinaison, en particulier une combinaison linéaire, d'une intégrale de la fréquence de rotation du modèle d'inertie et de l'au moins un signal de commande.

11. Le procédé selon l'une quelconque des revendications 1 à 10, dans lequel la machine est un générateur synchrone, et dans lequel le modèle d'inertie est un modèle mathématique de l'inertie du générateur synchrone.

12. Le procédé selon la revendication 11, dans lequel une machine synchrone virtuelle, VSM, est ou comprend le modèle d'inertie, et dans lequel le convertisseur de puissance est commandé sur la base de la VSM.

13. Un dispositif (1210) de commande d'un convertisseur de puissance couplé à un réseau électrique, le dispositif comprenant un processeur (1211) configuré pour :
obtenir une puissance de sortie du convertisseur de puissance (1230), un paramètre électrique du convertisseur de puissance (1230) et un paramètre électrique du réseau électrique (1220) ;
déterminer une erreur de commande de puissance sur la base de la puissance de sortie du convertisseur de puissance (1230) et d'une puissance de référence ;
déterminer une fréquence de rotation d'un modèle d'inertie sur la base d'un modèle d'inertie recevant l'erreur de commande de puissance en entrée, le modèle d'inertie étant un modèle mathématique de l'inertie d'une machine ;
déterminer un angle de phase sur la base de la fréquence de rotation du modèle d'inertie et d'au moins un signal de commande généré par au moins un paramètre suivant au moins un trajet de commande, différent d'un trajet de commande comportant le modèle d'inertie,
dans lequel l'angle de phase est un angle cible entre le paramètre électrique du convertisseur de puissance (1230) et le paramètre électrique du réseau électrique (1220) ;
dans lequel un trajet de commande supplémentaire, différent de l'au moins un trajet de commande, comprend un modèle d'amortissement prenant l'erreur de commande de puissance en entrée, le modèle d'amortissement étant un modèle mathématique de l'amortissement de la machine, et la fréquence de rotation étant déterminée sur la base en outre de la sortie du modèle d'amortissement ; et
commander le convertisseur de puissance sur la base de l'angle de phase.

14. Un support lisible par ordinateur, pour la commande d'un convertisseur de puissance couplé à un réseau électrique, portant des instructions pour réaliser le procédé selon l'une quelconque des revendications 1 à 12.
